(19) Europäisches Patentamt
European Patent Office
Office européen des brevets

(11) Publication number: 0 458 395 A1

# (12) EUROPEAN PATENT APPLICATION

(21) Application number: 91201160.8

(22) Date of filing: 14.05.91

(51) Int. Cl.5: H01M 8/18, H01M 8/06, H01M 10/44, C25C 7/00

(30) Priority: 23.05.90 NL 9001199

(43) Date of publication of application: 27.11.91 Bulletin 91/48

(84) Designated Contracting States: AT BE CH DE DK ES FR GB GR IT LI LU NL SE

(71) Applicant: STORK SCREENS B.V.
Raamstraat 3
NL-5831 AT Boxmeer(NL)

(72) Inventor: Sonneveld, Pieter Jan
57, Overspoor
NL-5705 JB Helmond(NL)

(74) Representative: Barendregt, Drs. F. et al
EXTERPATENT B.V. P.O. Box 90649
NL-2509 LP 's-Gravenhage(NL)

## (54) Method of charging a zinc suspension storage battery; zinc suspension storage battery and zinc suspension to be used for a storage battery.

(57) Described is a method of charging a half-cell of a zinc suspension/air storage battery in which during charging zinc build-up on the current conducting electrode (2, 10) is prevented by using a material for said electrode (2, 10) having a high-overpotential for zinc build-up and and by carrying out charging at a suitable potential which is not more than 50 mV higher than the absolute potential of the equilibrium potential of the zinc suspension-electrode assembly. In the method zinc build-up essentially occurs on the zinc particles which circulate. Also are described a zinc suspension/air storage battery allowing the charging method of the invention and a stabilized zinc suspension for use in such storage battery.

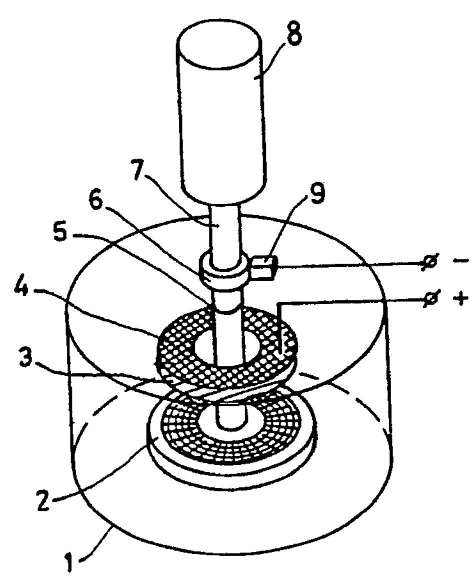


FIG. 1.

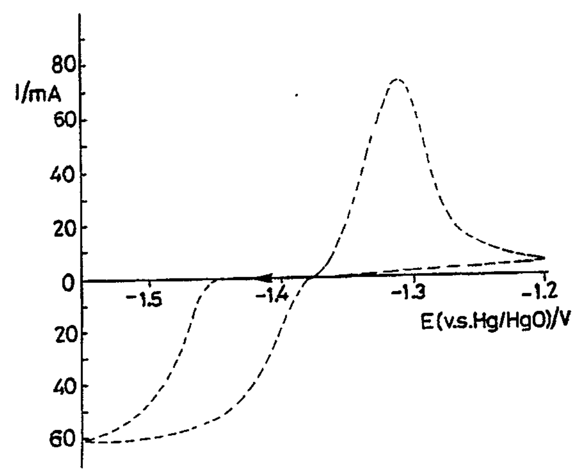


FIG. 4.

EP 0 458 395 A1

The application relates in the first place to a method of charging a half-cell of a zinc suspension/air storage battery in which the zincate present in the alkaline electrolyte is converted by electrolytic reduction into metallic zinc which is suspended in the electrolyte, in which process, during the charging, transport of the suspension present in the half-cell takes place in the direction of the surface of the current-conducting electrode present in the half-cell, with the result that the zinc particles therefrom collide with the electrode.

Such a method is disclosed in SAE 1977, Paper 770381 by A.J. Appleby, J. Jacquelin and J.P. Pompon.

Said article describes a charging system in which zinc is deposited under the influence of electrical current on magnesium electrodes which are sited in the electrolyte flow; briefly short circuiting the storage battery achieves the result that a portion of the zinc dissolves electrochemically, after which the zinc is separated from the magnesium electrode by the vigorous electrolyte flow and is suspended in the electrolyte.

During charging, dendrite-like structures are produced. A disadvantage is that the particle size and the shape are not controllable during charging, while dendrite formation only occurs at high current densities, high overvoltage being necessary, with the result that the efficiency is low.

The object of the present invention is to eliminate the disadvantages outlined, for which purpose the method of the type specified is characterised in that the suspension containing zinc particles is caused to circulate continuously and a material having a high overpotential for zinc build-up is used for the current-conducting electrode and, for the purpose of charging, a potential is chosen which is such that zinc build-up on the current-conducting electrode is avoided, but a zinc build-up does take place on the zinc particles present in the suspension which collide with the electrode.

It has been found that electrode materials may be distinguished which have a high overpotential for zinc build-up and that, depending on the collision efficiency between the zinc particles and the surface of the current-conducting electrode, zinc build-up on the electrode is avoided by working with a potential at the current-conducting electrode which is lower in an absolute sense than a certain critical potential, while on the other hand, zinc build-up does take place on the particles present in the suspension which, as a result of the transport in the direction of the current-conducting electrode, collide with said electrode. The following processes take place in the zinc/air storage battery:

$$Zn + 4OH^- \underset{\text{charging}}{\overset{\text{discharging}}{\rightleftharpoons}} Zn(OH)_4^{2-} + 2e$$

$$\tfrac{1}{2}O_2 + H_2O + 2e \underset{\text{charging}}{\overset{\text{discharging}}{\rightleftharpoons}} 2OH^-$$

——————————————————— (+

$$Zn + \tfrac{1}{2}O_2 + H_2O + 2OH^- \underset{\text{charging}}{\overset{\text{discharging}}{\rightleftharpoons}} Zn(OH)_4^{2-}$$

During the collision of zinc particles with the current-conducting electrode, charge transport can take place to the particles, as a result of which, as follows from the top equation, zincate contained in the liquid sheath around the particles can be converted to metallic zinc which deposits on the respective particle, and hydroxyl ions which diffuse away into the solution. The prerequisite in this connection is that the material of the current-conducting electrode is suitable and that a certain negative voltage is not exceeded in absolute value.

As regards the materials to be used for the current-conducting electrode, the following requirements apply:

- The development of $H_2$ must be inhibited by it.
- Passivation of it must not occur.
- Zinc build-up on the material may only occur if a particular overpotential is exceeded.
- The material must counteract coagulation of zinc particles.
- The adhesion of any zinc deposited must be low.
- The electrical conductivity must be good.

In particular, the material of the current-conducting electrode is chosen from metals, ceramic materials and types of carbon; beneficially, a smooth, polished surface is given to the current-conducting electrode.

Of the metals which are suitable, mention may be made, in particular, of magnesium, vanadium or niobium.

Suitable ceramic materials are boron carbide and zirconium nitride, while, of the types of carbon, mention may be made of glassy carbon and pyrolytic carbon.

Of the materials mentioned above, for example, boron carbide ($B_4C$) (which is possibly doped with SiC or VC) is found to be exceptionally satisfactory.

In carrying out the method of charging a half-cell for a zinc suspension/air storage battery, it is important that the zinc suspension has a good stability with respect to settlement and flocculation phenomena. In addition to reducing such phenomena, the electrochemical stabilisation is also of great importance in connection with self-discharging phenomena of a zinc suspension incorporated in a storage battery.

It has been found that an excellent stability is obtained if a zinc suspension is used which incorporates a stabiliser material chosen from ceramic materials which are optionally conductive, metals and silicate compounds.

Of the optionally electrically conductive ceramic materials, mention may also be made of the ceramic materials which have been specified above in relation to the material of the current-conducting electrode.

Of the metals, mention may be made, inter alia, of copper which was found to be capable of providing a stable suspension. Of the ceramic materials investigated, boron carbide was found to be outstanding as a result of a beneficial action on the stability.

Much investigation was done on silicate compounds as stabilisers; sepiolite, bentonite, palygorskite and montmorillonite were found to be very suitable.

In general, 1-5 % by weight of a suitable silicate compound is sufficient to stabilise the zinc suspension; the best results were obtained with palygorskite as silicate-type stabiliser.

It is pointed out that the summary given here of a number of suitable silicate materials is not an exhaustive one; for a review of usable silicate materials, reference is made to page 890 of the book by A.B. Searle and R.W. Grimshaw entitled The Chemistry and Physics of Clay, Ernest Benn Ltd., London 1960, in which a large number of readily obtainable minerals are listed which will, in principle, be usable; however, it has been found that there is a slight preference for mineral materials which have a needle-like or thread-like structure.

In the method according to the invention described above, a correct choice of the charging potential ensures that no zinc deposits on the current-conducting electrode made of a suitable material.

Although the instant at which the deposition of zinc starts on the usable materials varies, it is broadly true that the charging potential must not be made higher than the absolute value of the sum of the equilibrium potential +50 mV.

In other words, with an equilibrium potential of -1.35 V, the charging potential may be a maximum of -1.40 V.

The correct value for the charging potential for any electrode material/electrolyte combination can be determined in a simple way by an experiment in which the potential at which zinc begins to deposit on the electrode is determined.

The invention also relates to a zinc suspension/air storage battery at least comprising a housing which incorporates a zinc suspension half-cell having a current-conducting electrode, a suspension of zinc in an electrolyte and means of causing the suspension to circulate through the zinc suspension half-cell, which circulation provides the zinc particles at least with a velocity component in the direction of the current-conducting electrode, separator means and an air half-cell having an air electrode, which is characterised in that the air electrode is a bipolar oxygen electrode.

Using a bipolar oxygen electrode as air electrode achieves the result that the zinc suspension half-cell can be used both for discharging and charging.

For the purpose of discharging, said electrode has the function of reducing oxygen, which is catalysed by silver or platinum.

For the charging process, the electrode is an oxygen-developing electrode which comprises for this

purpose, for example, an $NiCo_2O_4$ catalyst.

In particular, the current-conducting electrode of the zinc suspension half-cell in the storage battery according to the invention is a disc-shaped electrode made of a suitable material and arranged to rotate horizontally near the bottom of the storage battery housing.

Choosing a rotating disc-shaped electrode as current-conducting electrode achieves the result that a suspension flow is produced in the direction of the electrode, in which process zinc suspension particles collide with the electrode; charge transfer can take place and zinc build-up on the electrode is avoided with a suitable choice of the electrode material and the electrode potential, while zinc build-up does take place on the particles.

Increasing the rotational speed of the rotating electrode achieves, inter alia, an increase in the chance of collision, thereby avoiding the possibility that zinc deposits on the electrode at a potential which is lower in an absolute sense than the abovementioned critical potential, while zinc is in fact formed on the particles using a relatively high charging current.

The charging efficiency therefore increases as the chance of collision is increased, as a result of which the charging process can take place in a shorter time.

In another embodiment of the zinc storage battery according to the invention, the current-conducting electrode is a stationary electrode in the form of a cylindrical surface which encloses the bipolar oxygen electrode, while means are moreover present to cause the suspension in the storage battery to rotate around the axis of the cylindrical surface. Causing the suspension to rotate inside the zinc suspension half-cell exerts a centrifugal force on the particles which are propelled outwards as a result and, in the process, collide with the cylindrical current-conducting electrode which forms the outside wall of the storage battery.

Of course, many other embodiments of the storage battery described above are conceivable for the person skilled in the art; the invention is therefore also not limited to the two embodiments outlined above.

Finally, the invention relates to a zinc suspension for use in a zinc suspension/air storage battery, comprising zinc particles which are suspended in an aqueous alkaline electrolyte, which is characterised in that, in addition to zinc, the suspension contains up to 5%, with respect to the total weight of the suspension, of a stabiliser which is chosen from ceramic materials which are optionally electrically conductive, metals and silicate compounds. The suspension may incorporate the ceramic materials, metals and silicate compounds described above; preferably, however, in a suspension which contains 5-25 % by volume of zinc, a silicate compound is used which is chosen from montmorillonite, sepiolite and palygorskite with a particle size of less than 1 $\mu m$.

Preferably, the zinc suspension according to the invention contains palygorskite having an average particle size of 0.1 $\mu m$ in a concentration of 1-2%.

The invention will now be explained with the aid of the drawing, wherein:

Figure 1 shows a diagrammatic and perspective view of a storage battery cell according to the invention having a rotating current-conducting electrode.

Figure 2 shows a diagrammatic and perspective diagram of a storage battery cell according to the invention having a cylindrical stationary current-conducting electrode.

Figure 3 shows a zinc suspension storage battery system in which a charged zinc suspension circulates with the aid of the method according to the invention.

Figure 4 shows a diagram of the current which occurs on varying the potential, applied to a current-conducting electrode, in respect of an Hg-HgO reference electrode, the electrode being immersed in a zinc suspension.

Figure 5 shows a family of curves as in Figure 4 on varying the rotational speed of the electrode in the storage battery cell according to Figure 1.

Figures 6A and 6B show the influence of a silicate additive to the suspension on the slope of the curve drawn in Figure 4, on varying the rotational speed of a rotating electrode from Figure 1.

Here, Figure 1 shows diagrammatically an experimental zinc/air storage battery which comprises a plastic cell wall 1 having a bottom in which an annular rotating electrode 2 is arranged. The material of the annular electrode is a suitable material which has a high overvoltage for the electrolytic deposition of zinc and which may be composed, for example, of boron carbide or glassy carbon. The surface of the rotating electrode has a mirror-bright polish in order also in this way to prevent attachment of zinc as far as possible. Arranged between the rotating electrode 2 and a bipolar oxygen electrode 4 is a separator 3 which is composed of a membrane or a microporous material; the diameter of the separator is drawn here as being equally as large as the diameter of the bipolar oxygen electrode 4; this has been done, however, exclusively for reasons of clarity. In reality, the separator 3 will extend up to the walls of the cell so that only electrolyte will be allowed through, but the zinc particles of suspension contained in the cell are held back. The membrane 3 moreover also closes off in a sealing manner the shaft 7 which is, moreover, completely

insulated from the electrolyte liquid with the aid of an insulating sheath. The passage of the shaft 7 through a cover located on the cell 1 is diagrammatically indicated by 5; there is also a seal at this point. 6 Indicates a slip ring which serves to remove the charge from the rotating electrode 2 with the aid of a carbon brush 9. 8 Indicates a motor for driving the rotating annular electrode 2, which may, moreover, be embedded in plastic.

Rotation of the current-conducting electrode 2 impels particles settling on the electrode outwards as a result of centrifugal force, as a result of which a flow of the electrolyte liquid comes into operation, at least one component of which is directed outwards towards the surface of the rotating electrode 2, the electrically conducting material of said electrode facing upwards. Said flow of electrolyte liquid, together with the zinc particles contained therein, is promoted by the acceleration due to gravity, with the result that rotation of the electrode 2 produces a situation in which the chance of collision of the separate zinc particles in the suspension with the surface of the current-conducting electrode is considerably increased. When a zinc particle collides with the electrode 2, said zinc particle can pick up charge from the electrode, as a result of which the zincate ions contained in a liquid sheath around each particle can be converted into metallic zinc according to the reaction equation given above, while the hydroxyl ions, also formed, vanish into the solution. The zinc formed will not deposit on the rotating electrode because of the relatively high overvoltage for zinc build-up, but will deposit on the colliding zinc particle, with the result that there is build-up of zinc particles in the solution.

Figure 2 shows another storage battery in which the electrodes have, in this case, a cylindrical shape. The current-conducting electrode is in this case indicated by 10, while 13 represents a standard membrane or microporous separator and 14 a bipolar oxygen electrode. 15 Indicates a plastic shield of the oxygen electrode, while 16 and 17 show, respectively, a shaft and motor for driving the propeller 11. Rotation of the propeller 11 causes the zinc suspension contained in the storage battery cell to rotate; the centrifugal forces which are consequently exerted on the zinc particles impels them outwards and, on colliding with the current-conducting electrode 10, they can pick up charge, as a result of which conversion of zincate ions can take place as described above in relation to Figure 1.

Figure 3 shows a zinc suspension storage battery system having flat current-conducting electrodes. The circulating zinc suspension is indicated by 21, while a current-conducting electrode is indicated by 22.

Turbulence promoters are indicated by 23, while a membrane or separator is indicated by 24. A bipolar oxygen electrode is indicated by 25, while 26 indicates pipes for supplying zinc suspension to the various discharge cells incorporated in the assembly. In this case, the housing 27 comprises two discharge cells sited in parallel; of course, more than two cells can also be accommodated in one and the same housing. The supply of atmospheric oxygen to the bipolar oxygen electrode 25 is shown diagrammatically by 28, while a pump for the zinc suspension/electrolyte system is indicated by 29. 30 Is a feedstock reservoir for the zinc suspension, while a suspension distributor is indicated by 31. It can be seen that, in this diagram, flow of suspension exclusively takes place through the lowermost half of the lowermost cell of both discharge cells at this instant; after flow has taken place through this cell for a short time, the suspension distributor 31 can be energised in order to ensure that the suspension then starts to flow through the lowermost half of the uppermost cell of the two cells; after a short time of flow through said uppermost cell, the flow can again be transferred to the lowermost cell.

Figure 4 shows a graph which is produced if an electrode of suitable material such as, for example, boron carbide or glassy carbon is placed in an alkaline zincate solution and the potential at said electrode, measured with respect to Hg/HgO starts to increase in the negative direction. Assuming the equilibrium potential $E_o$ of approximately -1.37 volts, we see that first, at around -1.45 volts, a current flows with simultaneous deposition of zinc metal on the electrode. The current increases to a maximum value of approximately -60 mA; the potential is then uniformly altered in the positive direction and the return current/potential line is observed.

The return line passes the horizontal axis at the equilibrium potential $E_o$, after which the anodic branch of the curve is followed, which indicates a dissolution of the zinc deposited earlier on the electrode. Here, again, a maximum value of approximately 80 mA is reached; on increasing the potential further, we then see the current decrease until the zero line is reached again. The experiment shown in this figure was carried out using a boron carbide electrode in a 6 molar KOH plus 0.25 molar $Zn(OH)_4^2$ electrolyte. The measurement was carried out in a cell having a rotating annular electrode at a rotational speed of the annular electrode of 9 revolutions per sec. The rate of variation of the potential was in this case 10 mV per second.

Figure 5 shows a graph incorporating a number of curves obtained according to the method as outlined in relation to Figure 4, but with the rotational speed of the disc-shaped electrode from Figure 1 being incorporated as an additional parameter. The electrode was in this case glassy carbon; the electrolyte was

composed of a 2 molar KOH solution to which 0.1 molar zinc oxide had been added and which contained 30% by volume of suspended zinc particles. Moreover, the solution contained an amount of 1% by weight of a silicate compound in the form of suspended palygorskite having a particle size of between 0.1 and 5 µm. The rate of change of potential was 50 mvolts per sec. The curves for a rotational speed of the disc-shaped electrode of 4-64 revolutions per sec correspond in shape to the shape of the curve as shown in Figure 4.

If the rotational speed of the rotating electrode is now increased, however, we see that the curve in the cathodic region (i.e. left of the equilibrium potential) starts to run more steeply, the steepest curve being found with the highest rotational speed (64 revolutions per sec). It was also found that, at such a high rotational speed, a high current can flow at potentials which are lower than E critical in an absolute sense, without the formation of metallic zinc taking place on the electrode. This graph therefore reveals that increasing the rotational speed of a rotating electrode in the storage battery cell according to Figure 1 increases the chance of collision between individual zinc particles and the rotating electrode and that it is possible to work at relatively high charging currents without deposition of zinc taking place on the electrode. Under those circumstances, the zinc build-up therefore takes place exclusively on the zinc particles themselves, which remain in suspension. Carrying out the charging process in a method according to the invention which, in addition to the presence of a suitable electrode material, ensures a velocity component of the circulating zinc suspension particles in the direction of the surface of the current-conducting electrode therefore results in a very beneficial charging process for a zinc suspension contained in a zinc suspension half-cell of a zinc suspension/air storage battery in which build-up of zinc on the electrode material is prevented and the associated problems do not occur.

In the description given with Figure 5 it was stated that the electrolyte also contained 1% of palygorskite in addition to the zinc particles.

Said palygorskite is a silicate material which is added to the zinc suspension in order to increase its stability.

It has been described above that stabilisers are composed of ceramic materials which may optionally be electrically conductive, metals and silicate compounds. In order to determine the self-discharge of a zinc suspension, the hydrogen gas development of a zinc suspension containing 12 molar KOH was measured. Suspensions which were provided with, for example, sepiolite, bentonite, montmorrillonite, palygorskite, $B_4C$ and copper were found to be suitable; of these, suspensions containing palygorskite had the lowest self-discharge.

Figure 6 indicates the influence of the added stabiliser on the steepness of the curves in Figure 5; the steepness of the curve is important for the charge transfer to the zinc suspension. In Figure 6A, the steepness of the curve in the cathodic region is therefore indicated on the vertical axis for the case where 1% by weight of palygorskite had been added to the zinc suspension.

The same graph is shown in Figure 6B; in this case, however, 2% by weight of palygorskite has been added to the suspension.

Comparison of Figures 6A and 6B reveals that, for a percentage by volume of 30% of zinc, an addition of 2% by weight of palygorskite gives a slope of 18 mA/volt at a rotational speed of 81 revolutions per sec, while a slope of approximately 15 mA per volt is observed with an addition of 1% of palygorskite under the same conditions.

Adding stabiliser therefore makes it possible to permit higher charging currents at the same charging potential and with a particular setting of, for example, the rotating electrode without deposition of zinc taking place on the electrode, which is very beneficial for the charging rate.

A suspension charged with the aid of the method according to the invention can be introduced into a storage battery arrangement as shown in Figure 3 in order to serve as a power source, for example, for electrical traction.

The arrangement in Figure 3 is conceived as so arranged that the current-conducting electrodes 22 are essentially horizontal. In this condition, this storage battery arrangement is also essentially suitable for acting as a power source.

If the arrangement according to Figure 3 is so positioned that the current-conducting electrodes 22 are essentially horizontally directed, an advantage may be expected from the action of the force of gravity to the benefit of the chance of collision of the zinc particles transported from the suspension through the cell, an increased chance of collision of the suspension particles with the electrode material 22 also being obtained in that case. If the circulation pump is temporarily switched off, the zinc particles will settle on the electrode, in which process an additional beneficial charge transfer will take place during charging and discharging of the storage battery half-cell. Under those circumstances, the storage battery arrangement from Figure 3 can be used both for charging and discharging purposes, assuming that the atmospheric

oxygen electrode 25 is of a bipolar type such as, for example, an oxygen-developing electrode which also incorporates an $NiCo_2O_4$ catalyst.

## Claims

1. Method of charging a half-cell of a zinc suspension/air storage battery in which the zincate present in the alkaline electrolyte is converted by electrolytic reduction into metallic zinc which is suspended in the electrolyte, in which process, during the charging, transport of the zinc suspension present in the half-cell takes place in the direction of the surface of the current-conducting electrode present in the half-cell, with the result that the zinc particles therefrom collide with the electrode, characterised in that the suspension containing zinc particles is caused to circulate continuously and a material having a high overpotential for zinc build-up is used for the current-conducting electrode (2, 10) and, for the purpose of charging, a potential is chosen which is such that zinc build-up on the current-conducting electrode (2, 10) is avoided, but a zinc build-up does take place on the zinc particles present in the suspension which collide with the electrode.

2. Method according to claim 1, characterised in that the material of the current-conducting electrode (2, 10) is chosen from metals, ceramic materials and types of carbon and the current-conducting electrode (2, 10) is given a smooth, polished surface.

3. Method according to claim 2, characterised in that the material of the current-conducting electrode (2, 10) is chosen from $B_4C$, Mg, glassy carbon, ZrN and V.

4. Method according to one or more of claims 1-3, characterised in that a zinc suspension is used which incorporates a stabiliser material chosen from ceramic materials which are optionally electrically conductive, metals and silicate compounds.

5. Method according to claim 4, characterised in that the zinc suspension incorporates 1-5% by weight of a silicate compound.

6. Method according to claim 4-5, characterised in that palygorskite is used as silicate compound.

7. Method according to one or more of claims 1-6, characterised in that charging takes place at a potential which is not more than 50 mV higher than the absolute value of the equilibrium potential for the zinc suspension and current-conducting electrode of the system contained in the half-cell and measured with respect to a standard electrode.

8. Zinc suspension/air storage battery at least comprising a housing which incorporates a zinc suspension half-cell having a current-conducting electrode (2, 10, 22), a suspension of zinc in an electrolyte and means (11, 29) of causing the suspension to circulate through the zinc suspension half-cell, which circulation provides the zinc particles at least with a velocity component in the direction of the current-conducting electrode, separator means (3, 13, 24) and an air half-cell having an air electrode (4, 14, 25), characterised in that the air electrode (25) is a bipolar oxygen electrode.

9. Zinc suspension/air storage battery according to claim 8, characterised in that the current-conducting electrode (22) is flat and arranged essentially horizontally, while turbulence promoters (23) are moreover present in the cell, while an impermeable partition (32) is present between each pair of mutually interacting half-cells.

10. Zinc suspension/air storage battery according to Claim 8, characterised in that the current-conducting electrode (2) is a disc-shaped electrode made of a suitable material and arranged to rotate horizontally near the bottom of the storage battery housing.

11. Zinc suspension storage battery according to claim 8, characterised in that the current-conducting electrode (10) is manufactured from a suitable material and is composed of a stationarily arranged cylindrical surface which encloses the bipolar oxygen electrode (14), while mechanical means (11, 16, 17) are present to cause the suspension present in the storage battery to rotate around the axis of the cylindrical surface.

**12.** Zinc suspension for use in a zinc suspension/air storage battery, comprising zinc particles which are suspended in an aqueous alkaline electrolyte, characterised in that, in addition to zinc, the suspension contains up to 5%, with respect to the total weight of the suspension, of a stabiliser which is chosen from ceramic materials which are optionally electrically conductive, metals and silicate compounds.

**13.** Zinc suspension according to claim 12, characterised in that the suspension contains 10-30% by volume of zinc and a silicate compound is used which is chosen from montmorillonite, sepiolite and palygorskite with a particle size of less than 1 µm.

**14.** Zinc suspension according to claim 13, characterised in that palygorskite having an average particle size of 0.1 µm is used.

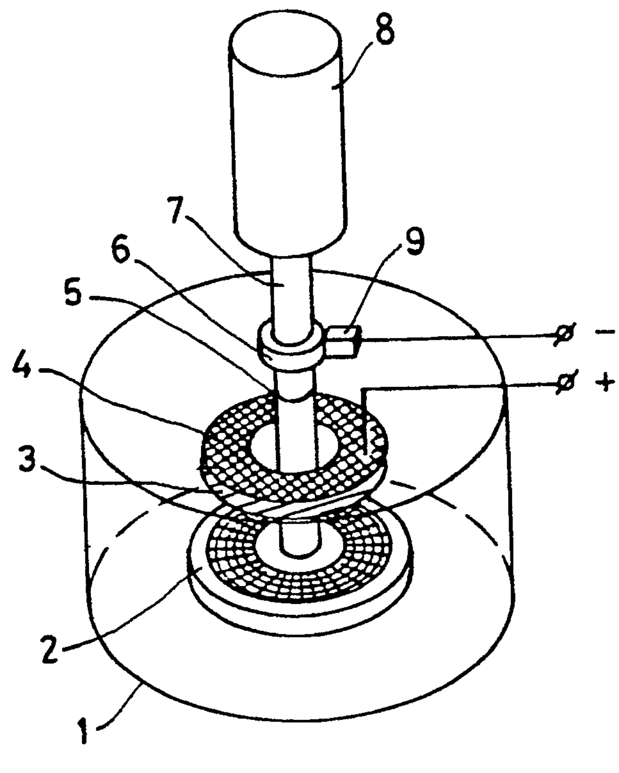


Fig: 1.

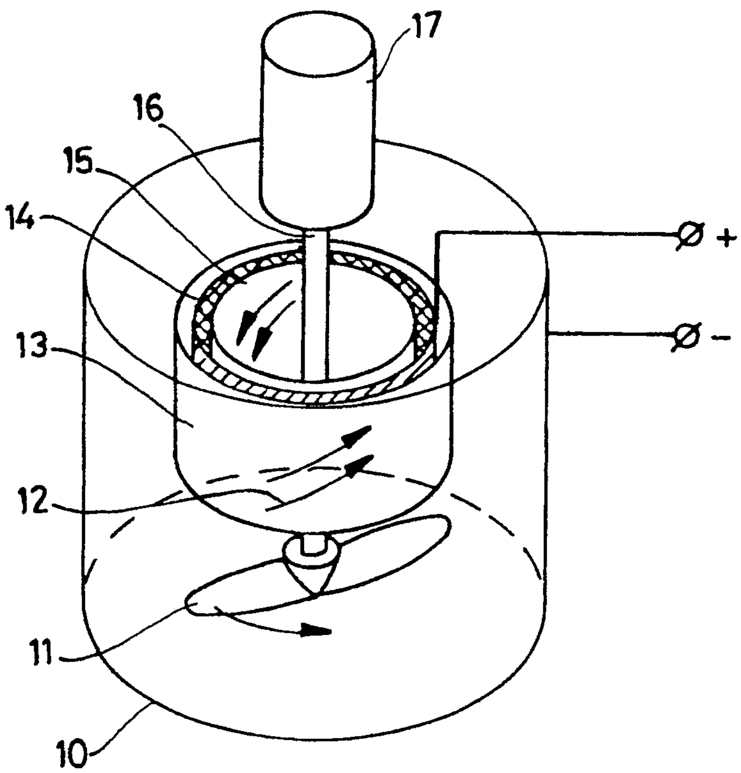


Fig. 2.

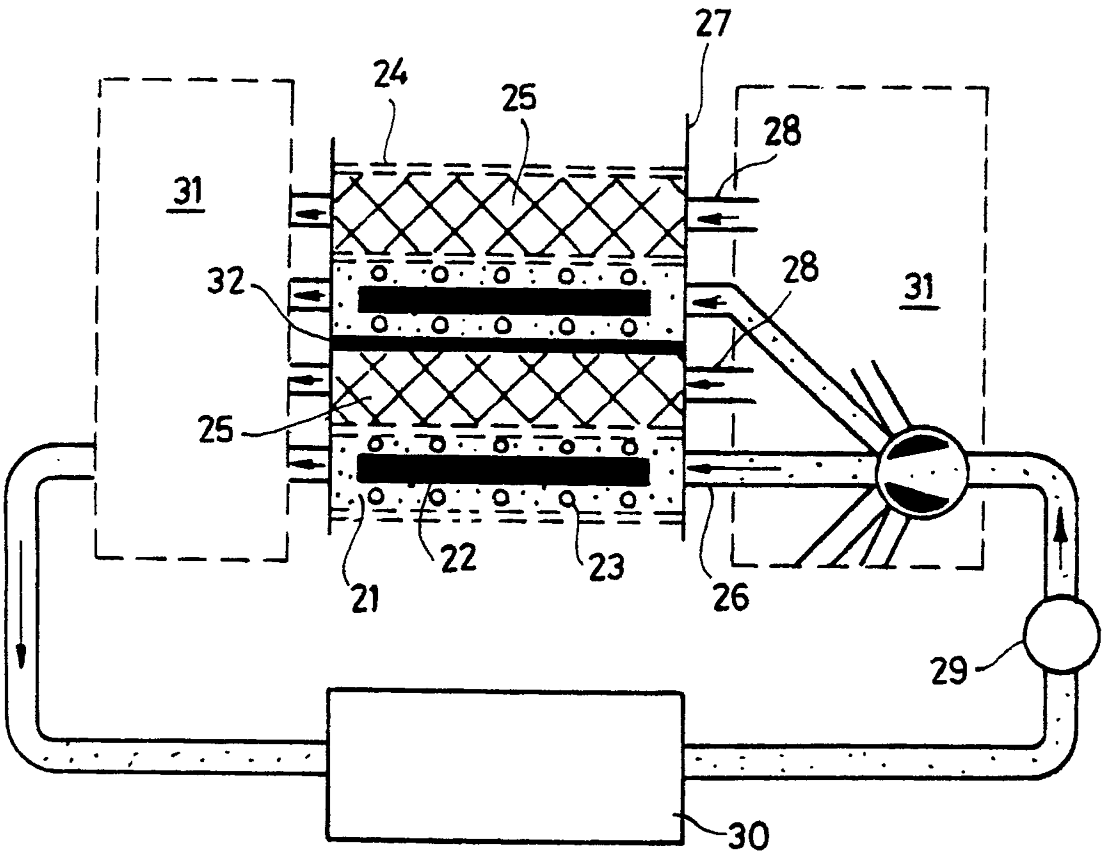


Fig. 3.

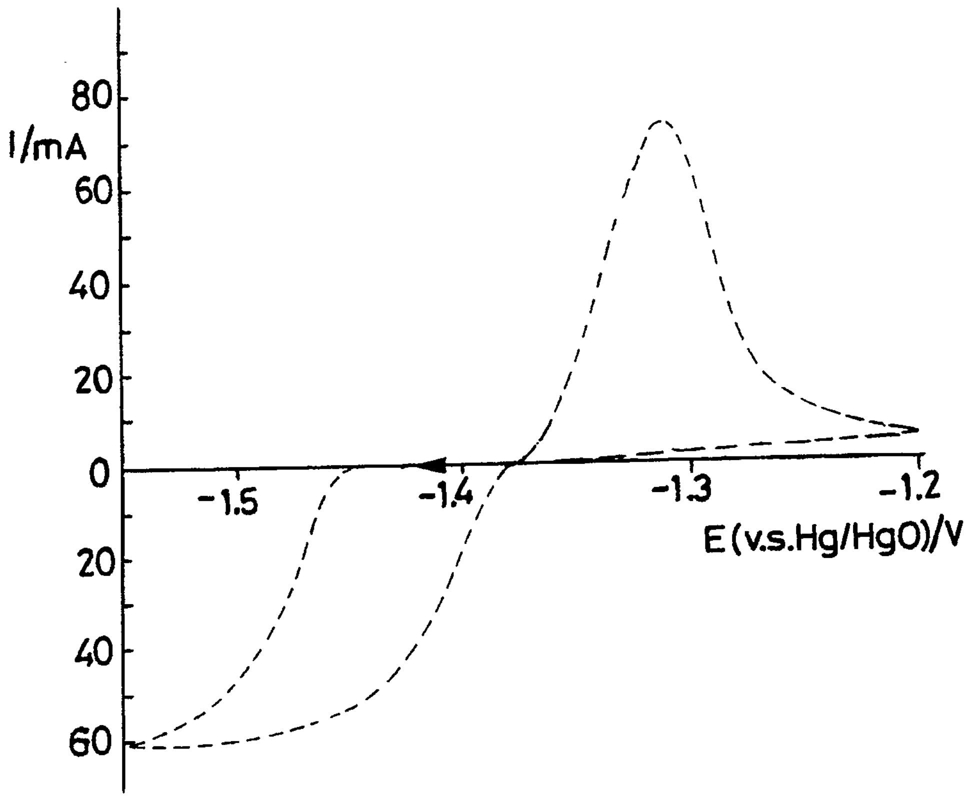


FIG: 4.

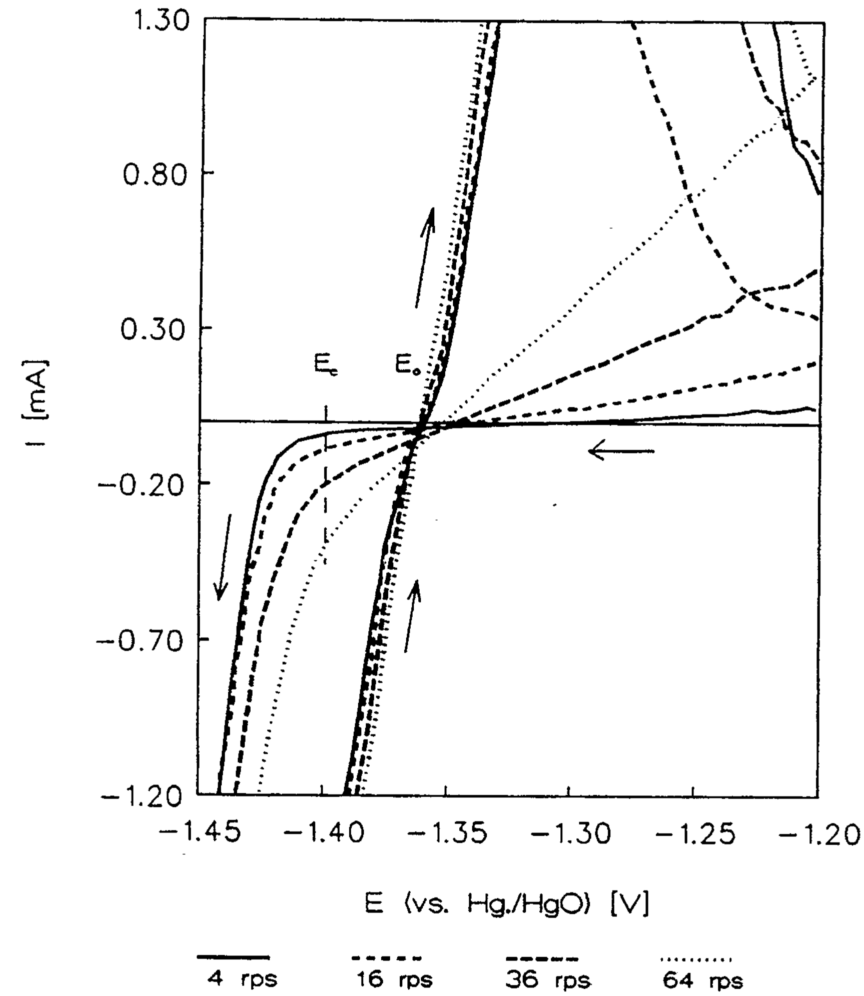
1.30
0.80
0.30
-0.20
-0.70
-1.20
I [mA]
Ec
Eo
-1.45
-1.40
-1.35
-1.30
-1.25
-1.20
E (vs. Hg./HgO) [V]
4 rps
16 rps
36 rps
64 rps

Fig: 5.

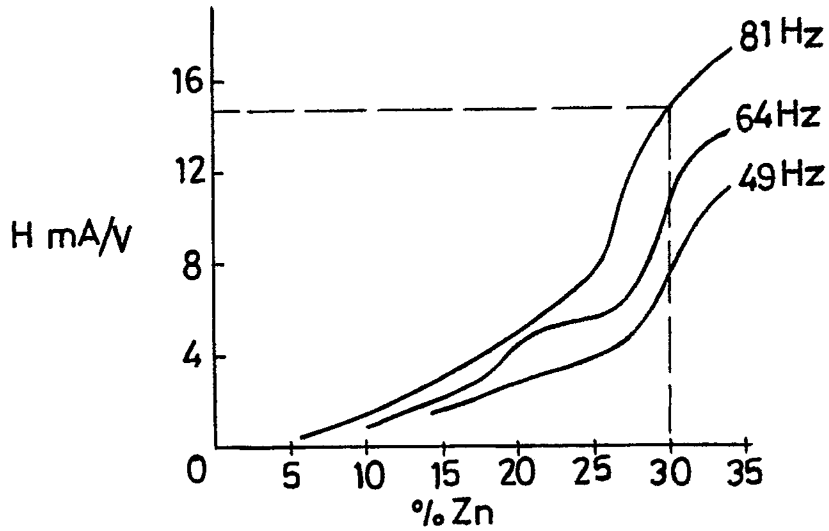
81 Hz
64 Hz
49 Hz
16
12
H mA/V
8
4
0
5
10
15
20
25
30
35
% Zn

Fig: 6a.

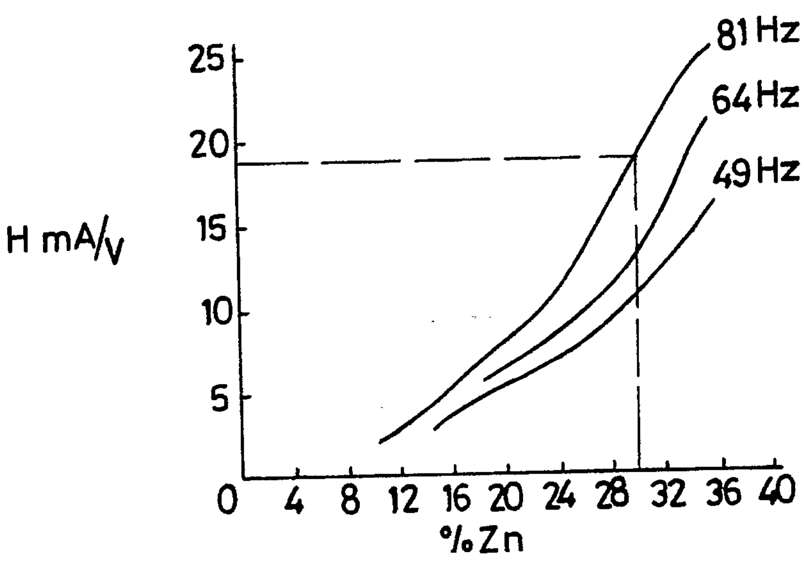
81 Hz
64 Hz
49 Hz
25
20
15
H mA/V
10
5
0
4
8
12
16
20
24
28
32
36
40
% Zn

Fig: 6b.

European Patent Office

# EUROPEAN SEARCH REPORT

Application Number

**EP 91 20 1160**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 330 290 (STORK SCREENS)<br>* Claims 1-3,8,9; page 2, lines 6-11,22-27,38-52; page 3, lines 19-23; page 4, lines 28-30; page 3, lines 41-49; figure 1 * | 1,2,4 | H 01 M 8/18<br>H 01 M 8/06<br>H 01 M 10/44<br>C 25 C 7/00 |
| Y | | 9 | |
| X | US-A-4 341 847 (A.F. SAMMELLS)<br>* Figure 2; claims 1,7,12; column 5, lines 33-41,65-67 * | 8,12 | |
| Y | | 9 | |
| X | EXTENDED ABSTRACTS, vol. 81-2, October 1981, pages 285-286, abstract no. 112, Pennington, NJ, US; R.J. REMICK et al.: "Zinc air batteries for electric vehicle propulsion"<br>* Page 285, lines 13-20 * | 8,12 | |
| Y | IDEM | 9 | |
| X | EXTENDED ABSTRACTS, vol. 81-2, October 1981, pages 287-288, abstract no. 113, Pennington, NJ, US; P.C. FOLLER et al.: "Improved slurry zinc/air systems as secondary batteries for vehicle propulsion"<br>* Page 287, lines 11-13,23-25 * | 8,12 | **TECHNICAL FIELDS SEARCHED (Int. Cl.5)** |
| X | CHEMICAL ABSTRACTS, vol. 85, no. 16, 18th October 1976, page 137, abstract no. 110786y, Columbus, Ohio, US; & JP-A-76 67 934 (SHIN-KOBE ELECTRIC MACHINERY CO., LTD) 12-06-1976<br>* Abstract * | 8 | H 01 M<br>C 25 C |
| X | US-A-3 767 466 (L.R. McCOY)<br>* Column 12, lines 35-59; example 7 * | 8 | |

-/-

The present search report has been drawn up for all claims

| Place of search | Date of completion of search | Examiner |
|---|---|---|
| The Hague | 26 June 91 | D'HONDT J.W. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document

European Patent Office

# EUROPEAN SEARCH REPORT

Application Number

EP 91 20 1160

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 172 924 (B. WARSZAWSKI)<br>* Claim 20; column 8, lines 22-31; column 5, lines 47-49 * | 8 | |
| A | EP-A-0 261 747 (SHELL INTERNATIONAL RESEARCH MAATSCHAPPIJ)<br>* Claim 1; page 4, lines 5-17 * | 1 | |
| A | WO-A-8 809 399 (CHEM-INVEST A.S.)<br>* Abstract; claim 1 * | 1 | |
| A | DE-A-2 644 199 (NATIONAL RESEARCH INSTITUTE FOR METALS)<br>* Figure 1; claim 1; page 7, paragraph 3 - page 11, last paragraph * | 11 | |
| A | US-A-3 887 400 (D. DONIAT et al.)<br>* Column 4, lines 58-62; figure 1 * | 9 | |
| A | FR-A-2 379 174 (MICHELIN & CIE)<br>* Claim 1; page 6, lines 5-37; page 8, line 1 - page 9, line 4; page 9, line 17 - page 9, line 2; page 2, lines 3-5 * | 1 | TECHNICAL FIELDS SEARCHED (Int. Cl.5) |
| A | EP-A-0 118 135 (STORK SCREENS B.V.)<br>* Figures 1,9,10; claims 1,7; page 4, lines 12-15; page 8, lines 31-35; page 11, lines 17-18 * | 11 | |
| A | FR-A-2 102 480 (COMPAGNIE GENERALE D'ELECTRICITE) | | |

The present search report has been drawn up for all claims

| Place of search | Date of completion of search | Examiner |
|---|---|---|
| The Hague | 26 June 91 | D'HONDT J.W. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document